# EUROPEAN PATENT SPECIFICATION

(11) **EP 0 418 861 B1**
(45) Date of publication and mention of the grant of the patent: **27.12.1996**
(21) Application number: 90118029.9
(22) Date of filing: 19.09.1990
(51) Int. Cl.: C08F 255/00, C08F 2/18

(54) **Method of preparing a polyolefine-vinylpolymer-composite**
Verfahren zur Herstellung von Polyolefin-Vinylpolymer-Verbundmaterial
Procédé de préparation d'un composite de polyoléfine et d'un polymère vinylique

(30) Priority: 20.09.1989 FI 894461
(43) Date of publication of application: 27.03.1991
(73) Proprietor: NESTE OY, SF-02150 Espoo 15 (FI)
(72) Inventor: Vestberg, Torvald, SF-06400 Porvoo (FI); Lehtiniemi, Ismo, SF-00530 Helsinki (FI)
(74) Representative: Bühling, Gerhard, Dipl.-Chem.

(56) References cited:
- US-A- 4 154 777
- US-A- 4 412 938
- DATABASE WPIL, N 89-353769, DERWENT PUBLICATIONS LONDON, GB & JP-A-1266104

## Description

The invention is concerned with a method of preparing polyolefinevinylpolymer-composite particles.

This invention is concerned with a new way to prepare a polyolefine composite which can be used as such and formed to different articles, as for exemple foamed plastic or components in semiconductor layers on electric cables. The composite consists of a polyolefine and a vinylpolymer and the invention is concerned with the preparation of this composite by polymerisation of the vinylmonomer inside the polyolefine particles.

To improve the consistency, dimension stability, printability and other properties of polyolefines which shall be formed to different articles or formed to foamed plastic, attempts have been made to mix the polyolefine with some vinylpolymer, for example polystyrene. Because of the low combatibility of the polystyrene in polyolefines it has, however, shown to be different to receive homogenous mixtures with an attractive appearance. Even small amounts, 0,2-10 procents of weight, result in a lower impact recistance and a worse appearance for the mixture.

To overcome these problems attemps have been made to polymerize the styrene inside the polyolefine particles. Mainly two different methods to polymerize the styrene in situ in the polyolefine particles have been presented and both methods are based on a way by which the styrene is impregnated into the polyolefine particles and after that the polymerisation of the styrene is carried out mainly in a conventional way. The most important difference between the two methods is the way in which the styrene is impregnated into the polyolefine particles.

In the West German patent DE 29 07 662 the polymerisation of styrene has been described in situ in several different polyolefines. In this method the styrene is added slowly to a water suspension containing the polyolefine particles in an elevated temperature. This means that impregnation and polymerisation of the styrene go on simultaneously, with the result that the polymerisation tends to happen mainly in the surface regions of the polyolefine particles with the result that the polystyrene is enriched in the surface layer of the polyolefine particles.

In the US-patent 4,412,938, there is described polymerisation of styrene in situ in ethene-vinylacetate copolymers. In this method, all of the styrene is added at the same time to a water suspension containing the eten-vinylacetate copolymer particles. The addition of the styrene is carried out at such a low temperature that no polymerisation occurs. Not until all of the styrene or the main part of the styrene has difused inside the eten-vinylacetate copolymer particles, the temperature is increased and the polymerisation begins. A disadvantage with this method is that it takes several hours before the styrene has diffused inside the eten-vinylacetate copolymer particles. The method is in other words time consuming.

US 4,154,777 disloses a two-stage-process for producing high impact and weather resistent graft copolymers, wherein a substantially non-polar rubber-like polymer of a defined iodine value is impregnated - without stirring - with a mixture of an aromatic vinyl component and a polar vinyl component in the presence of a polymerization initiator; after having finished the impregnation a bulk or suspension polymerization is performed. Then a mixture, which is obtained by dispersing with partly dissolving (or impregnating) said graft copolymer in (or with) a mixture of an aromatic vinyl compound and a polar vinyl compound, is subjected to bulk, suspension or bulk-suspension polymerization in the presence of a polymerization initiator.

In this application a method of preparing a polyolefine-vinylpolymer composite is described, which solves the aforementioned problems by the features as given in claim 1.

However, in the method of the invention, the good points of the earlier mentioned methods are retained, which in the first hand are that a homogenous mixture of the polyolefine and the vinyl polymer is received and that the polymerisation product is received in the form of particles.

Advantageous embodiments of the invention are the subject matter of the dependent claims.

After that the 100 parts of weight polyolefine particles as defined in claim 1 have been mixed with 10-200 parts of weight vinyl monomer and 0,01-4,0 parts of weight, calculated on 100 parts of monomer, of a free radical initiator, the mixture is agitated slowly at a temperature 20°C to 100°C, such that no decomposing of the initiator and no polymerisation occur, but the temperature is, however, so high that the polyolefine particles are impregnated with the monomer. When all of the monomer and the initiator have diffused inside the polyolefine particles, in other words, when the surface of the polyolefine particles is "dry", water and stabilisator are added. Then the temperature is raised and the polymerisation starts. When the polymerisation has come to the end, the polymerisation product is washed and dried.

In this method for preparation of a polyolefine-vinylpolymer composite, the absorption of the vinylmonomer occurs in the absence of water. This means that the monomer, to be able to penetrate the polyolefine particles, do not have to diffuse through a water phase, which means that the impregnation of the monomer is faster than in the method described in the US-patent 4,412,938. During the impregnation the polyolefine particles swells a little depending on how much vinyl monomer has been added but the form of the polyolefine particles is however retained.

An other aspect of this method is that the water is not added until the surface of the polyolefine particles is "dry". This method garantees that the monomer has diffused completely into the polyolefine particles and thus, a homogenous polyolefine-vinylpolymer composite is received.

In the following the invention is described in detail:

### The polyolefine

Useful polyolefines include high density polyethene, low density polyethene and linear low density polyethene. The polyethene can be a homopolymer or a copolymer. The comonomer can be for example vinyl acetate, methyl acrylate, methyl metacrylate, ethyl acrylate and metacrylate, buthyl acrylate, and -metacrylate, vinylchloride, propene or some other α-olefine. The α-olefine can be for example propene, butene, pentene, isofrene, hexene or mixtures thereof. In the case where the ethene polymer is a copolymer, the amount of ethene in the copolymer must be at least 50 percents of weight.

The polyolefine can also be polypropene and its copolymers. The propene copolymers must consist of more than 50 percents of weight of propene and the comonomer is ethene or an other α-olefine or some polar unsaturated monomer.

Ethylene-vinylacetate copolymers have shown to be especially suitable as polyolefines in the manufacturing of polyolefine vinylpolymer composites. In this case the amount of vinylacetate in the copolymer shall be 1-35 percents of weight.

The polyolefine has to be in particle form with the particle size of 0,5-10 mm, most prefarably 1-6 mm. When the polyolefine is in the form of particles it is easy to achieve a good agitation during the impregnation phase which is the condition for that the concentration of the vinylmonomer is the same in-all of the polyolefine particles. Too big particles may give problems in keeping the suspension stable at the end of polymerisation. Too small particles may also give rise to stability problems.

### The vinylmonomer

Suitable vinylmonomers are the aromatic vinylmonomers of the type styrene and substituted styrenes. The substituted styrenes may have the substituent on the benzene ring as in methylstyrene, isopropyl styrene and chloro styrene or on the α-carbon atom as in α-methyl styrene and α-ethyl styrene. Suitable vinylmonomers are some of the above mentioned monomers or mixtures thereof. The comonomers of the above mentioned aromatic vinylmonomers can also be other vinylmonomers, for example vinylacetate, acrylonitril, C₁-C₇ alkylacrylates, C₁-C₇ alkyl metacrylates, vinylhalides, metacrylonitril, maleic acid anhydride, acrylamide -and metacrylamide used in amounts not more than 50 percents of weight. Styrene has shown to be especially suitable for preparation of polyolefine vinylpolymer composites.

### The amount of vinyl monomer

The amount of vinyl monomer that is polymerized in the polyolefine matrix is 10-200 parts of weight calculated on 100 parts of weight polyolefine. More than 200 parts of weight vinyl monomer may give problems in keeping the polyolefine in the form of particles during the impregnation; the particles tend to agglomerate and form a homogenous phase. It is not appropriate to add less than 10 parts of weight of vinyl monomer because such amounts of vinyl polymer give only small changes in the properties of the starting polyolefine.

### The initiator

The initiators that are suitable for the polymerisation of vinyl monomers is such initiators that conventionally are used in connection with suspension polymerisation. Initiators suitable to be used to polymerize the vinyl monomer include organic peroxides as for exemple benzoyl peroxide, lauroyl peroxide, t-butyl perbenzoate, t-buthyl peroxide-2-ethylhexanate, t-butyl peroxide, dicumyl peroxide, di-t-butyl peroxide, bis(t-butylperoxyisopropyl)benzene, t-butylperoxyisopropylcarbonate and azo-compounds, as for example azobisisobutyronitril and azobisdimethylvaleronitril.

Preferably more than one initiator is used simultaneously so that the polymerisation is started with a low temperature initiator and is completed at high temperature with a high temperature initiator. The total amount of initiator can be between 0,01 and 4 parts of weight, most preferably between 0,1 and 1,2 parts of weight, calculated on 100 parts of weight vinyl monomer.

### Impregnation of the vinyl monomer

The inventive step of this invention is thus that the impregnation of the vinyl monomer in the polyolefine particles is carried out in the absence of water but in such a way that the polyolefine is sustained in the form of particles. The impregnation is carried out so that polyolefine particles, styrene and initiators are added to a reactor in any order. If the initiator or the initiators are in powder form they are preferably dissolved in a part of the total amount of vinyl monomer to garantee that the concentration of the initiator will be the same in the different polyolefine particles. Of the same reason also liquid initiators can be mixed with the vinyl monomer before they are mixed with the polyolefine particles.

The temperature during the impregnation is 20-100°C depending on the type of the polyolefine and the type of the vinyl monomer, in other words depending on how easily the vinyl monomer penetrates the polyolefine. The impregnation temperature shall be that low that essentially no polymerisation occurs during the impregnation phase. Thus, the impregnation temperature shall be taken into consideration in the selection of initiator.

With the intention that the concentration of the vinyl monomer shall be the same in the different polyolefine particles, the reactor content shall be mixed slowly during the impregnation. The agitation speed, expressed as the end speed of the mixer, shall be 0,05-5,0 m/s, most preferably 0,1-1,0 m/s. In a 22 litre reactor this end speed correspond to a agitation speed of about 10-100 rpm. Too high agitation speeds may cause decomposition of the polyolefine particles to powder form and at a too low agitation speed the vinyl monomer may be distributed unequally between the polyolefine particles.

The impregnation is complete when all of the vinyl monomer has been diffused inside the polyolefine particles. In practice this is the time when the surface of the polyolefine particles, after having been wet and blank of vinyl monomer is changed and gets a "dry" appearance. This change is scarp and easy to observe.

Generally, the impregnation takes 0,2-2,0 hours depending on how easily the vinylmonomer penetrates inside the polyolefine particles and depending on whether the impregnation is carried out in an increased temperature or not. It is not necessary to carry out the impregnation in the same reactor as the polymerisation.

### Preparation of the water suspension

When all of the vinyl monomer has penetrated inside the polyolefine particles, water and suspending agent is added and the agitation speed is increased to values usually used in connection with suspension polymerisation, in other words to such values that a good agitation in the reactor can be sustained and to keep the suspension stable.

Conventionally suspending agents can be used in the suspension polymerisation of vinyl monomers. The following ones can for instance be mentioned: water soluble polymers, as polyvinyl alcohol, polyvinyl pyrrolidon and metyl cellulose or partially water soluble agents, as calciumtriphosphate and magnesiumpyrophosphate.

The amount of water is not critical but it must be so high that the suspension is maintained during the polymerisation which means 80-1000 parts of weight water per 100 parts of weight polyolefine + vinyl monomer.

If the impregnation has been carried out in an increased temperature, the water can preferably be preheated to the same temperature before it is mixed with the vinyl monomer swelled polyolefine particles. This is made to avoid that vinyl monomer, as a result of the abrupt temperature decrease shall diffuse out from the polyolefine particles in the case that the temnperature of the added water is lower than the temperature of the polyolefine that is impregnated with vinyl monomer.

### Polymerisation of the vinyl monomer

The polymerisation of the vinyl monomer that has been absorbed inside the polyolefine particles is carried out by increasing the temperature in the agitated reactor, whereat the initiator decomposes and initiates the polymerisation. The polymerisation can be carried out at one or several temperatures in the temperature range of 50-140°C. Preferably, the polymerisation can be started at such a low temperature as 50-90°C and then it can be finished at a high temperature 90-140°C. Generally, the whole polymerisation takes between 5 and 15 hours.

After the polymerisation has gone to the end, the reactor is cooled and the product is then aftertreated in a normal way as in suspension polymerisations usually (for exemple wash and dry) and it is then ready for further treatments.

The polyolefine particles keep their particle form during the polymerisation. Compared with the original polyolefine particles the particles after the polymerisation are only a little bigger depending on the absorbed and polymerized vinyl monomer.

### The properties of the polymerisation product

The polymerisation product gives a homogenous impression and is esthetically attractive. The vinyl monomer polymerized in the polyolefine particle is distributed on pearls of the size of 0,05-2,0 µm, which are homogenously distributed in the polyolefine matrix. The concentration of the vinyl polymer is as high in the center regions as in the surface regions of the particle, determined from IR-spectra IR-microscopy.

As the vinyl monomer is polymerized inside the polyolefine particle, one part of the polymerized vinyl monomer will exist in homopolymer form and one part will be grafted onto the polyolefine, in a grafted form. Even if the proportion of the grafted vinyl polymer is considerably smaller than the proportion of homopolymer, its existence is important for the morphological stability of the composite, during processing.

One aspect of this invention is that the morphology of the composite is unchanged after processing, in other words, the vinyl polymer is still in pearl form, with the size of 0,05-2,0 µm, homogenously distributed in the polyolefine matrix. The processing of the composite is simple depending on a wide temperature range for processing and on a suitable melting index at the working temperature.

Compared with unmodified polyolefines the composites made in accordance with this invention have improved mechanical properties, as hardness, rigidity and in some cases strength.

### The use of the composite

Mixed polymer composites made in accordance with this invention can be used in many different ways, on the first hand depending on the used polyolefine and vinyl monomer and their proportions.

Thus, it is for example possible to increase the mechanical strength of many polyolefines by polymerisation in situ of a vinylmonomer inside the polyolefine. Thus, it is for example possible to increase hardness and rigidity of ethene vinylacetate copolymers and polypropenes by polymerisation in situ of styrene in these. These composites can be used as such and formed to different articles. The composites can also be mixed with other termoplastics, whereat the resulting composite has the above mentioned advantages.

Ethylene vinylacetate copolymer-polystyrene composites can be impregnated with any conventional blowing agent, as for example iso- or n-pentane and after that it can be expanded with water steam to foamed plastic. Such a foamed plastic have better elasticity properties and better resistance against different chemicals than polystyrene foam.

Polypropene-polystyrene composite films made in accordance with this invention can be stretched in one or two directions and thereafter they can be used as synthetic paper.

Composites of ethenevinylacetate-copolymer-polystyrenes can be components in electric cable semiconducting layers which then becomes easy to take off from the cable in coupling works.

### EXAMPLES

### Example 1

70 parts of weight (222 g) ethenevinyl-acetate copolymer-particles were added to a two litre reactor with the diameter of 2-3 mm. The ethene vinyl-acetat-copolymer (EVA) was the commercial product EVACO B 5028 of Neste Oy and contained 28 percents of weight vinyl-acetate and its melting index was 5 g/10 min, measured according to the standard ISO 1133, 2,16 kg and 190°C.

After that 30 parts of weight styrene was added as well as the initiators, which were azobisiso-butyronitril 0,4 percents of weight, benzoylperoxide 0,2 percents of weight and t-butyl peroxy benzoate 0,4 percents of weight. The percents of weight of the initiators are calculated on the basis on the amount of styrene. The mixture was slowly agitated, 30 rotations per minute, in room temperature, until all of the styrene and the initiator had diffused inside the EVA particles, which in this case took 45 minutes.

After the end of the impregnation the water suspension was made by adding 280 parts of weight water and 1,0 percents of weight tricalcium phosphate as stabilisator and 0,03 percents of weight sodium dodecyl benzene sulfonate. The percents of the stabilisators are calculated on the basis of the total amount of styrene and EVA polymer. After this, the agitation speed was increased to achive a good mixture in the reactor.

The polymerisation was started by increasing the temperature to 55°C and was kept there for in three hours. After that the temperature was increased to 90°C over 3,5 hours including two pauses of one hour each, one at 65°C and one at 75°C. After 1,5 hours at the temperature 90°C, the temperature was increased to 120°C and it was kept there for three hours to complete the polymerisation.

After cooling the reactor was emptied and the EVA-polystyrene composite particles with the size of 3-4 mm were washed and dried. The particles were white and homogenous. With scanning electron microscope it could be stated that the polystyrene was dispersed as round pearls with the size of approximately 0,2-0,5 µm in the EVA matrix.

### Example 2

This experiment was carried out in the same way as experiment 1, however, with the difference that the experiment was carried out in a 10 litre reactor and that the proportions of EVA and styrene was 50:50, or 833,6 g of the both. The amount of water was 5,2 kg and the impregnation took 80 minutes.

### Example 3

This experiment was carried out in accordance with experiment 1, with the difference that the experiment was carried out in a 22 litre reactor- and that the proportions of EVA and styrene were 60:40 or 2250 g : 1700 g. The amount of water was 12,35 kg and the impregnation took 60 minutes.

### Example 4

This experiment was carried out in the same way as experiment 3, however with the difference that the proportion of EVA and styrene were 85:15.

### Exemple 5

40 parts of weight (123 g) EVA polymer particles were added in a 2 litre reactor with the diameter of 2-3 mm. The EVA polymer was the commercial product EVACO B 2305-21 of Neste Oy and contained 5 percents of weight vinylacetate and its melting index was 2,3 g/10 min, measured according to ISO 1133 2,16 kg and 190°C. After that 60 parts of weight styrene was added and 0,4 percents of weight benzoyl peroxide and 0,67 percents of weight t-butyl peroxy benzoate as initiator. The percents of weight of the initiators are calculated on the amount of styrene. The mixture was slowly agitated, 50 rotations per minute, and was heated to 70°C to hurry up the impregnation of the styrene and the initiators inside the EVA particles. The impregnation took 2 hours.

After the end of the impregnation the water suspension was made by adding 280 parts of weight water of the temperature of 70°C and 1,0 percents of weight tricalsium phosphate as stabilisator and 0,03 percents of weight sodiumdodecyl benzene sulfonate. The percents of the stabilisators are calculated on the total amount of EVA and styrene. The agitation speed was increased to achieve a good mixing in the reactor.

The polymerisation was started by elevation of the temperature to 80°C which was maintained for 2 hours. After that the temperature was elevated to 90°C which was maintained for 3 hours. Finally, the polymerisation was completed at 125°C in 3 hours. The aftertreatment of the polymerisation product was made in the same way as in example 1 and it was found to have the same structure and appearance as in example 1.

### Example 6

This exemple was carried out in according with exemple 5 however with the difference that the proportion between EVA and styrene was 60:40 or 1000 g : 667 g and the polymerisation was carried out in a 10 liters reactor.

### Example 7

This example was carried out as example 5 but with the difference that the proportions of EVA and styrene were 80:20 and the polymerisation was made in a 22 litre reactor.

### Example 8

The polymerisation products from the above described experiment were in all cases very homogenous and the polystyrene was dispersed in form of round pearls with the size of 0,2-0,5 µm in the ethene vinylacetate copolymer matrix.

The composite of ethene vinylacetate copolymer-polystyrene was melt-pressed at 150-170°C to plates of the thickness 1 mm and 3 mm which thereafter were used for mechanical tests. The results of the mechanical tests can be found in table 1 and table 2.

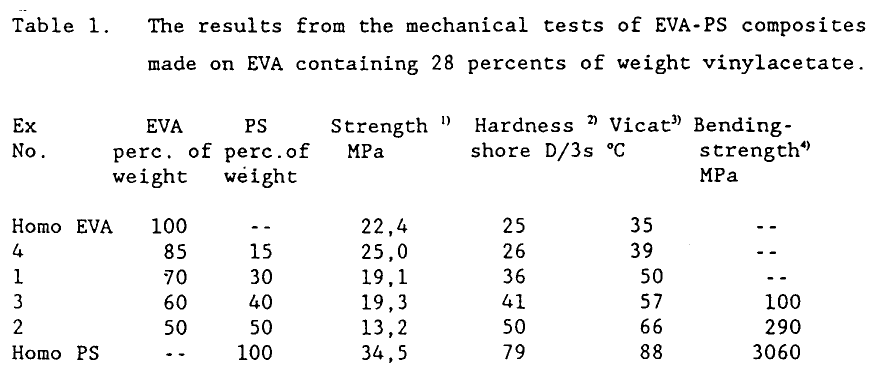

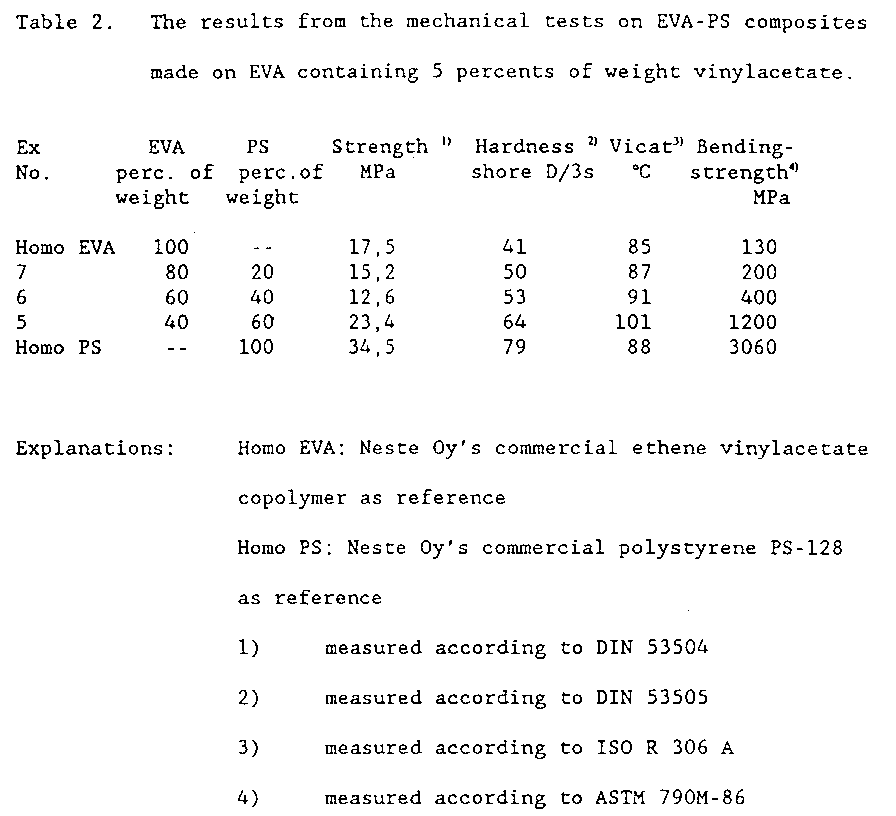

## Claims

1. Method of preparing a polyolefine-vinylpolymer composite, wherein
a) 100 parts by weight of particles of
- polyethene or
- polypropylene or
- an ethenecopolymer containing more than 50 percents by weight of ethene and a comonomer selected form the group of vinylacetate, an α-olefine, acrylic- or methacrylic-acid or -ester or vinylchloride or
- a propenecopolymer containing more than 50 percents by weight propene and a comonomer selected from the group of ethene, some other olefine or some polar unsaturated monomer
are impregnated with 10 to 200 parts by weight vinylmonomer and 0.01 to 4.0 parts by weight of a free radical polymerisation initiator, calculated on 100 parts by weight vinylmonomer, by slowly mixing at a temperature of 20 to 100°C in the absence of water, while maintainig the partical structure of the polyolefine;
b) after having finished the impregnation, a water suspension is prepared by adding 80 to 1000 parts by weight water, calculated on 100 parts by weight of the sum of polyolefine and vinylmonomer, to the aforementioned mixture together with a stabilisator;
c) increasing the temperature of the water suspension to polymerize the vinylmonomer.

2. Method according to claim 1, **characterized in that** the diameter of the polyolefine particle is 0.5 to 10 mm.

3. Method according to any of claims 1 or 2, **characterized in that** the vinylmonomer is an aromatic vinylmonomer of the type styrene or an substituted styrene like methyl styrene and α-methyl styrene.

4. Method according to claim 3, **characterized in that** not more than 50 percents by weight of the amount of aromatic vinylmonomer is replaced with an other monomer selected from vinyl acetate, acrylonitrile, methacrylonitrile, C₁-C₇ alkylacrylate or -methacrylate, vinylhalides, maleic acid anhydride, acrylamide and methacrylamide.

5. Method according to any of the foregoing claims, **charecterized in that** the initiator is an organic free radical polymerisation initiator selected from the group of peroxide or an azo compound.

6. Method according to claim 5, **characterized in that** said initiator is benzoyl peroxide, lauroyl peroxide, t-butyl peroxybenzoate, dicumylperoxide and azobis-isobutyronitril.

7. Method according to any of the foregoing claims, **characterized in that** the polymerisation of the vinylmonomer is carried out at a temperature of 50 to 140°C.

## Patentansprüche

1. Verfahren zur Herstellung eines Polyolefin-Vinylpolymer-Verbundwerkstoffs, bei dem
a) 100 Masseteile von Teilchen aus
- Polyethen oder
- Polypropylen oder
- einem Ethencopolymer, das mehr als 50 Masseprozent Ethen und ein Comonomer, das aus der Gruppe ausgewählt ist, die aus Vinylacetat, α-Olefin, Acryl- oder Methacrylsäure oder -ester oder Vinylchlorid besteht, enthält, oder
- einem Propencopolymer, das mehr als 50 Masseprozent Propen und ein Comonomer, das aus der Gruppe ausgewählt ist, die aus Ethen, irgendeinem anderen Olefin oder irgendeinem polaren ungesättigten Monomer besteht, enthält,
mit 10 bis 200 Masseteilen Vinylmonomer und 0,01 bis 4,0 Masseteilen eines Radikalpolymerisationsinitiators, berechnet für 100 Masseteile Vinylmonomer, durch langsames Vermischen bei einer Temperatur von 20 bis 100 °C in Abwesenheit von Wasser durchtränkt werden, während die Teilchenstruktur des Polyolefins aufrechterhalten wird;
b) nach Beendigung des Durchtränkens eine Suspension in Wasser hergestellt wird, indem der vorstehend erwähnten Mischung zusammen mit einem Stabilisator 80 bis 1000 Masseteile Wasser, berechnet für 100 Masseteile der Summe von Polyolefin und Vinylmonomer, zugesetzt werden; und
c) die Temperatur der Suspension in Wasser erhöht wird, um das Vinylmonomer zu polymerisieren.

2. Verfahren nach Anspruch 1, **dadurch gekennzeichnet, daß** der Durchmesser der Polyolefinteilchen 0,5 bis 10 mm beträgt.

3. Verfahren nach Anspruch 1 oder 2, **dadurch gekennzeichnet, daß** das Vinylmonomer ein aromatisches Vinylmonomer des Styroltyps oder ein substituiertes Styrol wie Methylstyrol und α-Methylstyrol ist.

4. Verfahren nach Anspruch 3, **dadurch gekennzeichnet, daß** nicht mehr als 50 Masseprozent der Menge des aromatischen Vinylmonomers durch ein anderes Monomer ersetzt sind, das aus Vinylacetat, Acrylnitril, Methacrylnitril, C₁- bis C₇-Alkylacrylat oder -Methacrylat, Vinylhalogeniden, Maleinsäureanhydrid, Acrylamid und Methacrylamid ausgewählt ist.

5. Verfahren nach einem der vorhergehenden Ansprüche, **dadurch gekennzeichnet, daß** der Initiator ein organischer Radikalpolymerisationsinitiator ist, der aus der Gruppe ausgewählt ist, die aus Peroxid oder einer Azoverbindung besteht.

6. Verfahren nach Anspruch 5, **dadurch gekennzeichnet, daß** der erwähnte Initiator Benzoylperoxid, Lauroylperoxid, t-Butylperoxybenzoat, Dicumylperoxid und Azobisisobutyronitril ist.

7. Verfahren nach einem der vorhergehenden Ansprüche, **dadurch gekennzeichnet, daß** die Polymerisation des Vinylmonomers bei einer Temperatur von 50 bis 140 °C durchgeführt wird.

## Revendications

1. Procédé pour préparer un composite de polyoléfine-polymère vinylique dans lequel on imprègne
a) 100 parties en poids de particules de
- polyéthène ou
- polypropylène ou
- un copolymère d'éthène contenant plus de 50 % en poids d'éthène et un comonomère choisi parmi l'acétate de vinyle, une α-oléfine, l'acide acrylique ou l'acide méthacrylique ou
- un ester ou du chlorure de vinyle ou
- un copolymère de propène contenant plus de 50 % en poids de propène et un comonomère choisi parmi l'éthène, une autre oléfine ou un monomère polaire insaturé
avec 10 à 200 parties en poids de monomère vinylique et 0,01 à 4,0 parties en poids d'un amorceur de polymérisation radicalaire, calculées pour 100 parties en poids de monomère vinylique, par mélange lent à une température de 20 à 100°C en l'absence d'eau en maintenant la structure particulaire de la polyoléfine ;
b) après avoir achevé l'imprégnation, on prépare une suspension aqueuse par addition de 80 à 1 000 parties en poids d'eau, calculées pour 100 parties en poids de la somme de la polyoléfine et du monomère vinylique, au mélange précité, avec un stabilisant ;
c) on élève la température de la suspension aqueuse pour polymériser le monomère vinylique.

2. Procédé selon la revendication 1, caractérisé en ce que le diamètre des particules de polyoléfine est de 0,5 à 10 mm.

3. Procédé selon l'une quelconque des revendications 1 ou 2, caractérisé en ce que le monomère vinylique est un monomère vinylique aromatique du type styrène ou un styrène substitué, tel que le méthylstyrène et l'α-méthylstyrène.

4. Procédé selon la revendication 3, caractérisé en ce que pas plus de 50 % en poids de la quantité du monomère vinylique aromatique sont remplacés par un autre monomère choisi parmi l'acétate de vinyle, l'acrylonitrile, le méthacrylonitrile, un acrylate ou méthacrylate d'alkyle en C₁-C₇, les halogénures de vinyle, l'anhydride maléique, l'acrylamide et le méthacrylamide.

5. Procédé selon l'une quelconque des revendications précédentes, caractérisé en ce que l'amorceur est un amorceur de polymérisation radicalaire organique choisi parmi un peroxyde ou un composé azoïque.

6. Procédé selon la revendication 5, caractérisé en ce que ledit amorceur est le peroxyde de benzoyle, le peroxyde de lauroyle, le peroxybenzoate de tert-butyle, le peroxyde de dicumyle et l'azobisisobutyronitrile.

7. Procédé selon l'une quelconque des revendications précédentes, caractérisé en ce que la polymérisation du monomère vinylique est effectuée à une température de 50 à 140°C.
